# EUROPEAN PATENT SPECIFICATION

(11) **EP 3 299 615 B1**
(45) Date of publication and mention of the grant of the patent: **24.04.2019**
(21) Application number: 16871780.9
(22) Date of filing: 26.07.2016
(51) Int. Cl.: F03D 13/10, F03D 1/00, B66C 1/62, B66C 1/10

(54) **SYSTEM FOR THE ASSEMBLY/DISASSEMBLY OF BLADES IN WIND TURBINES**
SYSTEM ZUR MONTAGE/DEMONTAGE VON SCHAUFELN IN WINDTURBINEN
SYSTÈME POUR LE MONTAGE/DÉMONTAGE DE PALES SUR DES AÉROGÉNÉRATEURS

(43) Date of publication of application: 28.03.2018
(73) Proprietor: Sling Supply International, S.A., 20180 Oiartzun Guipuzcoa (ES)
(72) Inventor: GARITAONANDIA ARAMBERRI, Pedro, 20180 Oiartzun (Gipuzkoa) (ES); LÓPEZ RUIZ, Mikel, 20180 Oiartzun (Gipuzkoa) (ES); RODRÍGUEZ ALDEA, Igor, 20180 Oiartzun (Gipuzkoa) (ES); AZURMENDI CORDERO, Ion, 20180 Oiartzun (Gipuzkoa) (ES)
(74) Representative: Codoñer Molina, Vicente
(86) International application number: PCT/ES2016/070564
(87) International publication number: WO 2018/020056

(56) References cited:
- EP-A1- 2 345 811
- EP-A1- 2 589 795
- EP-A1- 2 873 641
- EP-A1- 2 873 641
- WO-A1-2008/132226
- WO-A1-2012/095112
- WO-A1-2012/095112
- ES-T3- 2 387 331
- GB-A- 2 483 677
- KR-A- 20130 140 312
- KR-A- 20130 140 312

## Description

### Object of the Invention

This invention refers to a system for assembling/disassembling the blades in windmills that offers essential characteristics as far as novelty is concerned besides of remarkable advantages with respect to the means known and used for the same purposes in the current state of the art.

Specifically, the invention proposes the development of a system that would allow the assembling and disassembling of windmill blades in a much easier and quicker manner in comparison to the traditional systems, without having to move huge cranes to the place of installation every time a assembling or disassembling operation is carried out, and therefore in a much more economical manner than in said traditional systems. To such purposes, the system of the invention includes a number of devices that provide guide movements throughout the support tower during the ascent or descent of the blade with a total protection as far as its integrity is concerned and with an important turning capacity for the appropriate orientation of the blade at the time of facing the housing of the assembling support in the rotating hub of the windmill.

The application field of the invention is included within the industrial sector dedicated to the construction and installation of windmills to take advantage of the wind energy and its eventual conversion to electric energy.

### Background and Summary of the Invention

The experts in the matter are well aware of the complexities involved in operations to assembly and/or remove windmill blades using the means offered by the current methods. It is a known fact that the lifting or descent of a windmill blade requires the use of at least a fairly tall crane that needs to be temporarily located at the place of the installation and dismantled once the lifting or descent operations of the blade have concluded, and moved again to the place of origin or any other location, all of which requires an important mobilization of resources. In a real case of application of the current state of the art, the transportation of a crane of such characteristics may need up to 48 trucks, which obviously would represent a high cost associated not only to the transportation means but also to a huge amount of time and specialized labor required for assembling as well as disassembling the crane. In fact, there are situations in less developed countries where not even a crane is available to help in such work.

On the other hand, it is also known the existence of equipment and/or other means of diverse nature used during the lifting and descent of a windmill blade. In general, this kind of equipment and/or means usually include some kind of rack or similar guiding means which is incorporated in the tower of the windmill itself that is used as a movement guide during the ascent/descent operations of the means supporting the crane. These installations are normally complicated and of course involve very high costs.

Therefore, there is a real necessity in the current state of the art for finding solutions that allow simplifying and reducing the costs of all the work associated with the transportation, assembling and disassembling of the means required for the installation or removal of the blades of the windmill. Likewise, it would be equally beneficial to have the appropriate equipment for hoisting and lowering the windmill blade that is easy to build, easier quicker and more economical to operate, and makes use of the means offered by the current state of the art, while at the same time allowing to carry out all these operations with total security in the elements being employed (this is to say, the blades of the windmill) offering also total security for the staff that participates in the installation.

WO2008/132226 discloses a system for assembling and disassembling the blades of a windmill, the mounting device is attached to the tower and on the other end clamping the blade such that a hoist can be executed. The existence of WO 2014/070197 is already known within the current state of the art, in the name of the applicant, disclosing a system for assembling and disassembling the blades of a windmill, that meant a great technical advance with respect to the means and systems used for hoisting and lowering the blades of a windmill by eliminating the need to use a number of components, both external and associated with the supporting tower itself, thus saving time and costs with respect to the traditional systems.

However, further investigations carried out by the applicant have allowed to develop means and equipment that improve in a considerable manner the whole operation process dealing with the ascent and descent of the windmill blades in conditions of higher security, investing less time and with lower costs.

The above indicated goals have been fully achieved through a system that will be described here-below and which essential characteristics have been detailed under the claims attached to the present description.

Thus, a first aim of the invention consists in providing an ascending/descending system of a windmill blade for the purpose of its assembling/disassembling, wherein the elements that are part of the equipment for the practical materialization of the system have been designed in such a way that permit an easy transportation up to the installation site, inside three or four containers carried in three or four trucks. As an only auxiliary element the installation means are intended to include a truck-crane of a conventional kind besides the resources usually available in a wind turbine fields.

A second aim of the invention consists of developing and creating an equipment capable of ascending/descending along the tower of the windmill, in a totally safe manner and without transmitting any stress to the structure of the nacelle.

In order to achieve both aims, the system of the invention for assembling and disassembling the windmill blades has considered the creation of equipment made of:
- A hoisting structure, capable of being rigidly attached to the tower and providing an element to support the load during the operations of ascent/descent of a blade.
- A main structure (also called "CBR") capable of moving through the length of the tower up to the top that includes movable lifting points to control the horizontal position as well as attachment points for the rest of the components required to carry out the maneuver.

- A "clamp" structure to hold the blade from equidistant points in both sides of the gravity center of the blade, which does not only allow to grab the blade during the hoisting operation but is also capable of allowing the subsequent change of orientation of the blade from the horizontal position up to the vertical position, maintaining such vertical position in the event of any external force until the hoisting operation is finished.
- Lifting means in the main structure, materialized through an equipment that includes four traction cables that work in cooperation with the hoisting structure, in such a way that an end of each one of the traction cables is fastened to the main structure while the other end is fastened, through a respective capstan, external to the structure, that operates in electric or hydraulic manner at ground level, maintaining its operation position through an anchor to the ground or by positional immobilization using the appropriate counterweight for each capstan.

As it may be understood, a piece of equipment designed to respond to the structural and operation characteristics explained above, destined to the ascending and descending operations of a windmill blade during its assembling and dissembling operations in the windmill hub, makes the whole operation a lot easier in connection with the transportation and the use of the equipment, thus saving time, labor and above all transportation and operation expenses in comparison with the systems of the current state of the art used for the same purposes.

### Brief Description of the Drawings

These and other characteristics and advantages of the invention will be clearly seen starting from the detailed description of a preferred embodiment that follows, which is given merely by means of illustration and not in a limiting manner, with reference to the attached drawings where:
- Figure 1 shows a basic elevation schematic representation of the concept underlying on the base of the system of the present invention;
- Figure 2 shows a schematic representation, in perspective, of the hoisting structure;
- Figure 3 shows a schematic representation, in perspective, of the CBR structure;
- Figure 3a shows a schematic representation, in perspective, of a mobile lug nut;
- Figure 3b shows a schematic representation, in perspective, of one of the two claws of the pincers, and
- Figure 3c shows a schematic representation, in perspective, of the turning mechanism.

### Description of a preferred embodiment

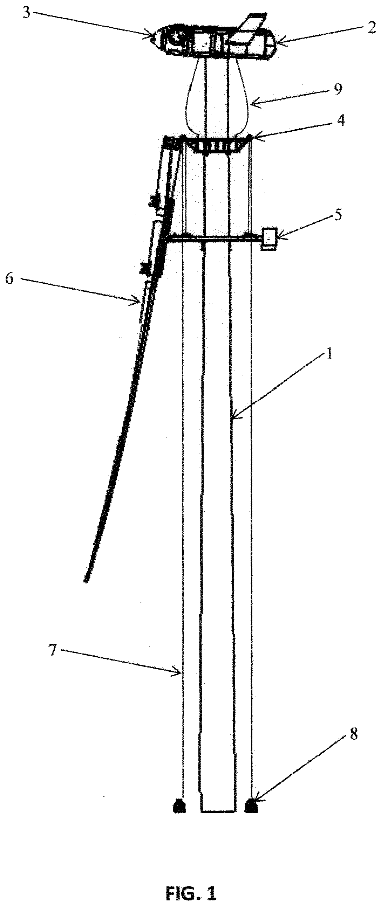

As pointed out above, a detailed description of the preferred embodiment will be made hereinafter with the help of the attached drawings where the same numerical references have been used to designate the parts that are equal or similar. Thus, considering in the first place the representation of Figure 1, it may be appreciated a schematic view of a specific case where the system of the present invention would be applicable. Specifically the representation shows a tower 1 of a general frustoconical shape that supports a windmill 2 of any kind by its upper end. The windmill includes a rotating hub 3 where the blades (not shown in the drawing) are settled in. The system of the invention includes sufficient equipment for hoisting the blades, one by one, up to a position high enough to fit each blade in hub 3. In order to achieve this goal, the invention has contemplated the design of a hoisting structure 4, provided with clamping means and prepared to adapt to tower 1 and provide means of support for structure CBR 5. The hoisting structure is raised using cables 9, that are sufficiently relaxed as to avoid the transmission of any stress to the windmill 2 during the service operations and attached to capstans (not shown), which ends are tied to the hoisting structure 4 and the lower part of the windmill 2. Hoisting structure 4 is provided with a mechanism of geometry variation to absorb the diameter variations of tower 1 (a more detailed explanation will be offered in connection with subsequent figures) and allow a shift of structure 4 without ever getting in contact with the tower, with the exception of the final position, where structure 4 will be rigidly attached to the tower through hydraulic supports, allowing means of support for the installation and removal maneuvers of the blades 6. On the other hand, there is a structure CBR 5, provided with pincers with clamps for fastening blade 6 and also turning mechanisms to modify the position of the blade from the horizontal position of transportation up to the vertical position of operation. Likewise, the system offers a group of four lifting lug nuts with capacity to move in the two directions of the horizontal level to modify the position of the assembly and allow the possibility of adjusting in a very precise form the fitting of blade 6. The structure CBR 5 is operated through four cables 7 that come from capstans secured by bolts or counterweights fixed on the ground, go up to hoisting structure 4 and going across some pulleys (not shown on the Figure) are redirected towards the lug nuts of structure CBR 5.

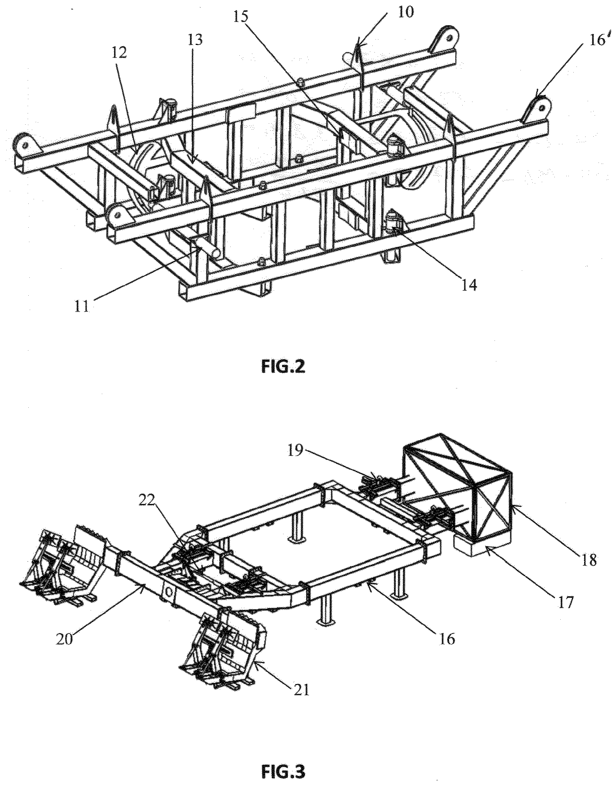

After describing the general structure and operation of the system based on the schematic representation of Figure 1, each one of the elements of the system that allow the operation as a whole will be described more in detail. In this sense the description will be made in connection with the representation of Figure 2 to explain hoisting structure 4, and will use the subsequent figures to explain the equipment CBR 5 and its components.

The several systems included in the hoisting structure 4 are used for the lifting and removal of the structure itself and the transmission of stress required to provide a lifting point for structure CBR 5 during the assembling/disassembling maneuvers. Hoisting structure 4 is placed surrounding the tower and will be capable of carrying out all maneuvers of lifting and descending always surrounding the tower. For this reason hoisting structure 4 requires the incorporation of a mechanism of geometry modification in order to absorb the variation of diameter of tower 1 from the lowest point on the ground up to the level of work. In order to do so, and as shown under Figure 2, a hydraulic actuator of separation 11 is used which modifies the distance between the lateral trusses of the hoisting structure. At the same time a bolt inserted in guide 12 generates a circular movement in the supporting arm 13. In an open position this supporting arm 13 is separated and does not go into the radio of action of the tower during the lifting/descending process, keeping the hydraulic actuator of separation 11 in extended position. In a closed position, arms 13 are as close to the surface of the tower as possible, without going into direct contact with it and locked by means of blocking bolts fastened to hydraulic blocking cylinders 14. In this way, a mechanically stable structure is created without needing to resist any stress through the hydraulic actuators. The sequence of movements for assembling the structure over the tower requires placing the structure in an open position and to act over the capstans which cables 9 remain fixed to windmill 2 at one end and to the lug nuts 10 of the structure. Once in position, the system performs over supports 15 in the tower, which consist of elements that finish in an elastic material to improve the transmission of stress and maximize the friction with the surface of the tower and that have hydraulic actuators (not shown in the Figure) to generate the movement required to get in contact with the tower and add pressure to maintain the hoisting structure 4 secured to the tower 1. When the structure is solidly attached to the tower, cables 9 relax in order to avoid transmitting any stress to the windmill. Lastly a number of pulleys 16' have been provided to direct the cables 7 of the main capstans 8 from the floor to equipment CBR 5.

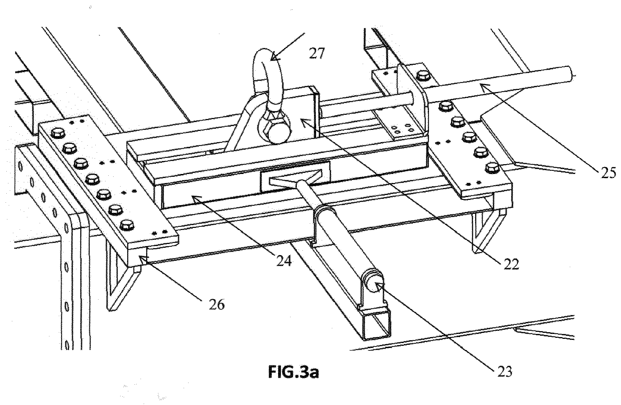

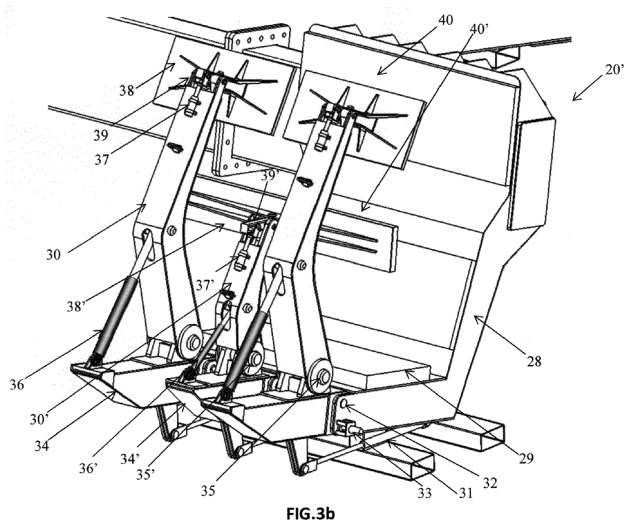

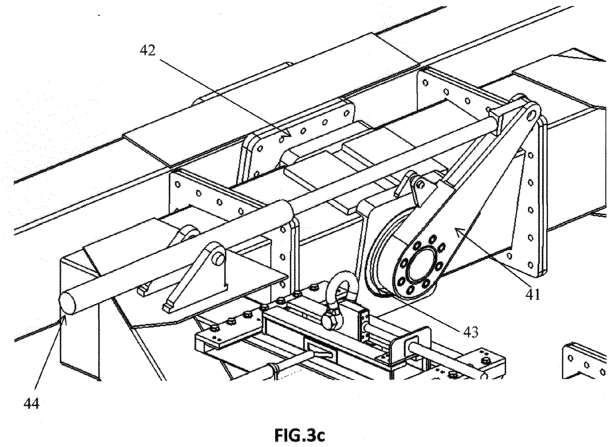

On the other hand, the equipment CBR 5 will be explained based on Figure 3 and also based on more detailed views of portions of such Figure under Figures, 3a, 3b and 3c. Thus, referring to Figure 3, the most important parts of the equipment CBR 5 may be seen. In first place, structure 16 may be seen which geometry has been specifically conceived in accordance with the requirements of the maneuver. In first place, it has an internal gap with the appropriate dimensions as to allow the vertical movement of the equipment while maintaining tower 1 in the inner part of the structure without any risk of collision with the tower. Structure 16 accommodates the attachment points with the mobile lug nuts 19, a blade turning mechanism 22, a pair of pincers 20 and a box 18 that contains the hydraulic group and the electronic equipment. Under box 18 are the counterweights 17 required to maintain the equipment stability during the blade ascent/descent operations and to keep the equipment in the air. All these devices allow to modify the position of the equipment in the three dimensions, using the main capstans 8 for vertical movement and the mobilization of the mobile lug nuts for the two directions in the horizontal level. Figure 3 shows a detailed view of the mobile lug nuts 9 which consist of a main block 22 with accommodation housing for a shackle 27 that is the element that transmits the load from the weight of the whole equipment CBR 5 and blade 6. To block 22 a hydraulic actuator 25 is attached for movement in the direction X. In order to get a guided and controlled movement, the main block 22 is introduced in a guide 24 to allow movement in the X axis. Likewise this guide 24 is attached to a second hydraulic cylinder 23 to allow movement in direction Z. The guide 24 is introduced in a second guide 26 for the purposes of controlling the direction of the movement in direction Z. The four mobile lug nuts 19 are provided with the same movement mechanisms. These movements are synchronized so that the shifting of the equipment CBR 5 is horizontal avoiding any spinning. Guides 24 and 26 have been provided with elements of low friction coefficient in order to reduce the load over the actuators.

To get to know in detail how pincers 20 operate, reference is made to figure 3b that shows one of the two claws 20' included in clamp 20 of the equipment CBR 5. Each claw 20' consists of a fix body 28 and three arms 40. The arms are of two types: two high arms 40 and a low arms 40', which is a requirement to apply the load over the reinforced areas of the blade profile. The operation of the elements that make up the low arm 40 with respect to the elements of the 40 long arms is similar. The claws 20' must have the capacity to support the weight of the blade in two directions, the first one when the blade 6 is in horizontal position and the load is supported by the fix body 28 through mechanic transmission or direct contact between both bodies, while to maintain the load when the blade is in vertical position, claw 20' must apply pressure over the surface of the blade in order to generate a static friction that overcomes the own weight of the blade as well as the effects arising from environmental conditions or external stress. Likewise, the claw 20' must have sufficient capacity as to be able to afford the fastening and unfastening of the blade in safe conditions without producing unwanted interactions, both among the components themselves and with the blade. All these features are offered by the arms 40 and their mechanisms and structures. The basic structure of arm 40 consists of a tubular element 34 that is attached through a ball and socket joint 32 and a hydraulic fastening mechanism 33. At the same time this tubular element 34 is the attachment point with arm 30 through a ball and socket joint 35 that allows the arm to rotate or reach or separate from the surface of the blade. The maneuver to remove the arm and allow access to the blade to go in and out of claw 20' begins with the withdrawal of hydraulic fastening mechanism 33; then withdrawal cylinder 31 is actuated, which through a lineal movement, generates a twist around the ball and socket joint 32 that separates the arm 40 as a whole. The inverse maneuver allows to generate a rigid structure between the arm 40 and the fix body 28. The support 38 is the element that must transmit the compression and shearing stress arising from the blade fastening. Since there is no total precision about the placing of the pair of pincers with respect to the blade, a positioning mechanism is provided which is guided by distance sensors (not shown on the image) that determine the best position of the support with respect to the blade surface so that the transmission of the compression may generate a distribution of the surface tension as uniform as possible. To accomplish that, the positioning cylinder 37 generates a spinning movement over support 38 through the ball and socket joint 39. Finally a power element is required to generate sufficient force over the blade in order to assure enough static frictional force, and to that end a cylinder of pressure 36 has been included.

Finally Figure 3c shows in detail the turning mechanism 22. The turn is made by a system 42 with a shaft fasten to pincers 20. The shaft 42 trespasses the main structure of the CBR 5 finding support in a pair of bearings 43. At the other end, the shaft is attached through bolts, to a turning arm 41. To activate the turning mechanism, arm 41 is attached to the turning cylinder 44. This turning cylinder 44 is attached to structure 16 through a ball and socket joint, providing a pivoting point of support and is also attached to the turning arm 41 through another ball and socket joint. When cylinder 44 is activated, arm 41 moves and generates the turn of shaft 42, that in turn causes the solidary turn of pincers 20.

Now, after offering details as to how the components of the system CBR operate, a description of the operation concerning the blade assembly is given.

A first step involves to unload all the elements of the system from the transportation trucks. All operations are carried out using supplementary cranes or a forklift which are usually available at the site wherein the invention is practiced. The hoisting structure 4 is placed on the ground, surrounding tower 1. An operator takes the cables 9 up to the windmill and then drops them. The cables are connected to hoisting structure 4 through hoisting capstans (not shown on the figures). Structure 4 is in an open position, as previously described. Before initiating the hoisting, the cables 7 of the main hoisting coming directly from the capstans 8 must be installed as these cables must go up together with the hoisting structure 4. By pulling the capstans the structure is raised up to the point of operation while the main capstans 8 are pulled to release cable 7 in such a way that there is no interference with the maneuver. At this point, the relevant mechanisms are activated to close and fix the hoisting structure to tower 1. A preload over cables 7 is made to determine that structure 4 is settled in and there will be no shifting at the time of loading it. The assembling of the equipment CBR 5 is then initiated. The same as in the assembling of structure 5, only a forklift or an auxiliary crane is required. Once the equipment has been installed, the mobile lug nuts 19 are tied up to hoisting cables 7. The opening mechanisms of pincers 20 are then activated. Using an auxiliary crane and a standard blade swing, blade 6 is taken in horizontal position to pincers 20. While maintaining the blade into the swing, pincers 7 are closed over blade 6 applying a pressure which has been predefined depending on the type of blade. Once the blade is properly grasped, the blade swing may be removed. The capstans 8 are then activated to lift the whole equipment CRB 5 and blade 6. After reaching the turning level the turning cylinder 44 is activated to place the blade in vertical position. The hoisting must continue until reaching a level close to that for the fastening in the rotating hub 3. In this point, the cylinders 23/25 for horizontal movement are activated to adjust the position in such a way that the bolts of the blade line up and fit in the housings in the bearing of the rotating hub 3. Also, the capstans 8 may be activated in order to modify the inclination of the whole set making sure the bolts remain coaxial to the housings. If necessary, the angle of blade 6 may also be adjusted through the turning cylinder 44. The operator must combine all these movements until the bolts are properly introduced in the bearing, then a operator must install the nuts and apply the torque recommended by the windmill manufacturer. The blade then is attached by means of the rotating hub 3 which means the releasing mechanisms of pincers 20 may be activated. Again, the cylinder 23/25 for horizontal movement are used to separate pincers 20 from blade 6 and avoid any contact during the descending process. Once the turning level in the air is reached, cylinder 44 is activated to take pincers 20 to the horizontal position. Using the capstans 8 the structure CBR 5 may be taken to the ground.

Thus, when the disassembling of a blade is carried out, the operation must be conducted in a manner opposite to that described above (i.e. a disassembling operation of blade 6 for its separation of rotating hub 3 where its installed), and in order to reach that goal sufficient equipment has been provided to guarantee the subsequent disassembling phases with total security and in a relatively short period of time.

As the person skilled in the matter may understand after reading this description, the goals proposed by the invention have been fully achieved through the present system, substantially improving the safety associated with the assembling and disassembling operations of the windmill blades, thus also improving the structural characteristics, offering multiple advantages in comparison with the previous technique, in particular when considering the WO 2014070197, among which mention must be made, as a way of example, of those that are summarized below:
- No need of hoisting points over the windmill, a structure located over the tower is used instead;
- The assembling is easier, the equipment more compact and the fastening system safer;
- No additional system is required for the mechanical transition of stress (going from the blades being supported by the tool to being supported by the windmill hub);
- The turning system of the blade does not require the use of any additional crane;
- There is no need for any other device to maintain the pressure over the tower during the shifting which means that the critical elements are reduced and the maintenance simplified; also, the area of possible flaws over the towers painting is reduced;
- The invention system has the capacity to fasten several models of blades, while the previous systems are subject to the diameter of the blade root, requiring different clamps for different types of blades;
- The system of the invention reduces the working area on the ground with respect to other systems of the state of the art; if taking into account that on many occasions the surface available is minimal, the system of the invention increases significantly the performance range of the equipment, and
- Although the function to which the present invention is destined is the same in comparison with other systems of the state of the art, this invention presents a design that is totally different, simpler, more economical and safer than those currently existing.

Making the content of this description any longer is deemed unnecessary for an skilled person in the matter to understand its scope and the resulting advantages in order to make a practical realization of the invention.

Notwithstanding the above, and since the description made corresponds only to an example of a preferred embodiment of the invention, it may be perfectly understood that within its essentials, multiple variations may be introduced, also protected, which may affect the shape, the size or the materials of fabrication of the whole or any of its parts, without that implying any alteration of the invention, which is only restricted by the claims provided below.

## Claims

1. System for assembling/dissembling blades of windmills, designed to provide a number of devices and means that allow to carry out the operations of ascent/descent of a blade (6) of windmills for the purposes of assembling/dissembling of said blade (6) in/from a rotating hub (3) of the windmill, the system including:
• a main structure (5), capable of moving along the whole extension of a tower (1) of a windmill up to the top of such tower and including supporting means to hold a blade (6) that are fastened to the rotating hub (3) of the windmill;
• means of adjustment to the geometry of the several models of blade (6), incorporated in pincers (20) of said main structure (5), which adjusting means consist of turning high arms (40) and low arms (40') that when in operation, force supporting elements (38) to keep a constant pressure with the surface of the blade (6) thus assuring a minimum static friction, higher than the weight of the blade (6), while the main structure (5) moves along the length of said tower (1) during the ascending/descending phases;
• a hoisting structure (4) associated to tower (1), which constitutes the element for supporting the load during operations of ascent/descent of a blade (6) of the windmill, **characterized in that** the hoisting structure (4) has sufficient capacity to transmit the stress directly to the tower (1) without abutting less resistant parts as the windmill (2) or the rotating hub (3), through supports (15) that generate pressure and sufficient capacity to modify its own geometry and avoid possible collisions with the tower (1) during the ascent/descent of the mentioned hoisting structure (4) by means of hydraulic mechanisms (11), further **characterized in that** it includes:
• a set of movable lug nuts (19) that allow a controlled movement in the horizontal level of the main structure (5) to tightly control its position, and
• means for lifting the main structure (5) which include four traction cables (7), two on each side, that cooperate with said hoisting structure (4) and that at one end are tied to a respective side of said movable lug nuts (19) of that main structure (5) and at the other end are fastened to the shaft of a respective capstan (8) of that same side.

2. System according to claim 1 **characterized in that** the hoisting structure (4) includes resistant elements, made up by a set of four cables (9) unitarily fastened at one end to the lower part of the windmill (2) and at the other end to hoisting capstans, allowing the hoisting in the air of the hoisting structure (4) and avoiding any load during the service maneuvers.

3. System according to claim 1, **characterized in that** said pincers (20) are linked through a turning mechanism in the central area to the body (16) of the main structure (5), with sufficient capacity to modify the position in angle of pincers (20) through a shaft (42) that is unitarily fastened through bolts to pincers (20) and also to a turning arm (41) and by means of the action over a turning cylinder (44) that with a lineal movement generates a turning motion over pincers (20).

4. System according to claim 1, **characterized in that** the means for fastening of the main structure (5), in form of movable lug nuts (19), are provided with mechanisms for moving in both directions of the horizontal level through actuators (23, 25) and also with guides (24, 26) that guarantee the possibility of controlling the position of the main structure (5) at all times, allowing to carry out maneuvers of adjustment to introduce the bolts of the blade (6) in housings of the bearing in the rotating hub (3).

5. System according to claim 1, **characterized in that** it includes electronic position controlling elements capable of permitting optimal contact among supporting elements (38, 38') of the arms (40, 40') and the geometry of blade (6), regardless of the precision at the time of positioning said blade (6) with respect to pincers (20).

6. System according to claim 1, **characterized in that** it includes elements that allow to modify the geometry of pincers (20), such as withdrawal cylinders (31) and fastening cylinders (33) in order to avoid any kind of unwanted contact during the fastening/release of the blade (6), during the assembling as well as during the disassembling of such blade.

## Patentansprüche

1. System zur Montage/Demontage der Flügel von Windturbinen, das gestaltet ist, um eine Reihe von Vorrichtungen und Mitteln bereitzustellen, die es ermöglichen, die Vorgänge der Auf-/Abwärtsbeförderung eines Flügels (6) von Windturbinen zwecks Montage/Demontage des Flügels (6) an eine/von einer rotierende(n) Nabe (3) der Windturbine durchzuführen, wobei das System Folgendes beinhaltet:
• eine Hauptstruktur (5), die in der Lage ist, sich entlang der gesamten Höhe eines Turms (1) einer Windturbine bis zum oberen Ende des Turms zu bewegen, und die an der rotierenden Nabe (3) der Windturbine befestigte Stützmittel beinhaltet, um einen Flügel (6) zu halten;
• Mittel zur Anpassung an die Geometrie der verschiedenen Flügelmodelle (6), die in Greifern (20) der Hauptstruktur (5) eingebracht sind, wobei die Anpassungsmittel aus drehenden hohen Armen (40) und niedrigen Armen (40') bestehen, die bei Betrieb die Stützelemente (38) dazu zwingen, einen konstanten Druck mit der Oberfläche des Flügels (6) aufrechtzuerhalten und somit eine minimale Haftreibung, die größer als das Gewicht des Flügels (6) ist, sicherzustellen, während sich die Hauptstruktur (5) während der Aufwärts-/Abwärtsphasen entlang der Länge des Turms (1) bewegt;
• eine mit dem Turm (1) assoziierte Hubstruktur (4), die das Element zum Stützen der Last während der Vorgänge der Auf-/Abwärtsbeförderung eines Flügels (6) der Windturbine darstellt, **dadurch gekennzeichnet, dass** die Hubstruktur (4) über eine ausreichende Leistung verfügt, um über Stützen (15), die Druck und eine ausreichende Leistung erzeugen, um ihre eigene Geometrie zu verändern und mögliche Zusammenstöße mit dem Turm (1) während der Auf-/Abwärtsbeförderung der erwähnten Hubstruktur (4) mittels hydraulischen Mechanismen (11) zu vermeiden, die Spannung direkt auf den Turm (1) zu übertragen, ohne an weniger widerstandsfähige Teile wie die Windturbine (2) oder die rotierende Nabe (3) zu stoßen, weiterhin **dadurch gekennzeichnet, dass** es Folgendes beinhaltet:
• eine Gruppe von beweglichen Radmuttern (19), die eine kontrollierte Bewegung in der Horizontalebene der Hauptstruktur (5) ermöglichen, um deren Position genau zu kontrollieren, und
• Mittel zum Anheben der Hauptstruktur (5), die vier Zugseile (7), zwei an jeder Seite, beinhalten, die mit der Hubstruktur (4) zusammenwirken und über ein Ende an eine jeweilige Seite der beweglichen Radmuttern (19) der Hauptstruktur (5) festgebunden und über das andere Ende an den Schaft einer jeweiligen Winde (8) auf derselben Seite befestigt sind.

2. System nach Anspruch 1, **dadurch gekennzeichnet, dass** die Hubstruktur (4) widerstandsfähige Elemente beinhaltet, die aus einer Gruppe von vier Seilen (9) gebildet sind, die einheitlich über ein Ende an den unteren Teil der Windturbine (2) und über das andere Ende an Hubwinden befestigt sind, die das Heben der Hubstruktur (4) in der Luft ermöglichen und jegliche Belastung während der Betriebsmanöver vermeiden.

3. System nach Anspruch 1, **dadurch gekennzeichnet, dass** die Greifer (20) über einen Drehmechanismus im zentralen Bereich mit dem Körper (16) der Hauptstruktur (5) verbunden sind, sodass die Leistung ausreicht, um die Winkelposition der Greifer (20) über einen Schaft (42), der einheitlich über Bolzen an den Greifern (20) sowie an einem Dreharm (41) befestigt ist, durch Wirkung auf einen Drehzylinder (44), der mit einer linearen Bewegung eine Drehbewegung gegenüber den Greifern (20) erzeugt, zu verändern.

4. System nach Anspruch 1, **dadurch gekennzeichnet, dass** die Mittel in Form von beweglichen Radmuttern (19) zum Befestigen der Hauptstruktur (5) mit Mechanismen, die über Stellantriebe (23, 25) die Bewegung in beide Richtungen der Horizontalebene ermöglichen, sowie mit Führungen (24, 26), die gewährleisten, dass die Position der Hauptstruktur (5) jederzeit kontrolliert werden kann, versehen sind, sodass Anpassungsmanöver ausgeführt werden können, um die Bolzen des Flügels (6) in die Gehäuse des Lagers in der rotierenden Nabe (3) einzuführen.

5. System nach Anspruch 1, **dadurch gekennzeichnet, dass** es elektronische Positionskontrollelemente beinhaltet, die in der Lage sind, unabhängig von der Genauigkeit zum Zeitpunkt der Positionierung des Flügels (6) in Bezug auf die Greifer (20) einen optimalen Kontakt zwischen den Stützelementen (38, 38') der Arme (40, 40') und der Geometrie des Flügels (6) zu ermöglichen.

6. System nach Anspruch 1, **dadurch gekennzeichnet, dass** es Elemente beinhaltet, die eine Veränderung der Geometrie der Greifer (20) ermöglichen, wie Rückzugszylinder (31) und Befestigungszylinder (33), um jegliche Art von unerwünschten Kontakt beim Befestigen/Lösen des Flügels (6), bei der Montage sowie bei der Demontage des Flügels zu vermeiden.

## Revendications

1. Système de montage/démontage de pales d'éoliennes, conçu pour fournir un certain nombre de dispositifs et moyens qui permettent de réaliser les opérations de montée/descente d'une pale (6) d'éoliennes en vue du montage/démontage de ladite pale (6) dans/depuis un moyeu rotatif (3) de l'éolienne, le système comprenant :
• une structure principale (5), capable de se déplacer tout le long de l'étendue d'une tour (1) d'une éolienne jusqu'au sommet de cette tour et comportant des moyens de support pour soutenir une pale (6) qui sont fixés au moyeu rotatif (3) de l'éolienne ;
• des moyens d'ajustement à la géométrie de plusieurs modèles de pale (6), intégrés dans des tenailles (20) de ladite structure principale (5), ces moyens d'ajustement consistent en la rotation des bras supérieurs (40) et des bras inférieurs (40') qui, lorsqu'ils sont en opération, contraignent des éléments de support (38) à garder une pression constante avec la surface de la pale (6) en assurant ainsi un frottement statique minimum, supérieur au poids de la pale (6), pendant que la structure principale (5) se déplace le long de ladite tour (1) durant les phases de montée/descente ;
• une structure de levage (4) associée à la tour (1), qui constitue l'élément destiné à soutenir la charge durant les opérations de montée/descente d'une pale (6) de l'éolienne, **caractérisée en ce que** la structure de levage (4) a une capacité suffisante pour transmettre la contrainte directement à la tour (1) sans être adjacente aux parties moins résistantes telles que l'éolienne (2) ou le moyeu rotatif (3), via des supports (15) qui génèrent une pression et une capacité suffisante pour modifier sa propre géométrie et éviter d'éventuelles collisions avec la tour (1) durant la montée/descente de la structure de levage (4) mentionnée au moyen de mécanismes hydrauliques (11), **caractérisée en outre en ce qu'**il comprend :
• un jeu d'écrous à ergot mobiles (19) qui permettent un mouvement contrôlé dans le niveau horizontal de la structure principale (5) pour commander étroitement sa position, et
• des moyens de hissage de la structure principale (5) qui comprennent quatre câbles de traction (7), deux de chaque côté, qui coopèrent avec ladite structure de levage (4) et qui à une extrémité sont attachés à un côté respectif desdits écrous à ergot mobiles (19) de cette structure principale (5) et à l'autre extrémité sont fixés à l'arbre d'un cabestan respectif (8) de ce même côté.

2. Système selon la revendication 1, **caractérisé en ce que** la structure de levage (4) comprend des éléments résistants, composés d'un jeu de quatre câbles (9) unitairement fixés à une extrémité à la partie inférieure de l'éolienne (2) et à l'autre extrémité à des cabestans de levage, permettant le levage en l'air de la structure de levage (4) et évitant toute charge durant les manoeuvres de service.

3. Système selon la revendication 1, **caractérisé en ce que** lesdites tenailles (20) sont reliées via un mécanisme tournant dans la zone centrale au corps (16) de la structure principale (5), avec une capacité suffisante pour modifier la position dans l'angle des tenailles (20) via un arbre (42) qui est unitairement fixé par des boulons aux tenailles (20) et également à un bras tournant (41) et par l'action sur un cylindre tournant (44) qui avec un mouvement linéaire génère un mouvement de rotation sur les tenailles (20).

4. Système selon la revendication 1, **caractérisé en ce que** les moyens pour la fixation de la structure principale (5), sous la forme d'écrous à ergot mobiles (19), sont fournis avec des mécanismes pour se déplacer dans les deux sens du niveau horizontal via des actionneurs (23, 25) et également avec des guides (24, 26) qui garantissent la possibilité de contrôler la position de la structure principale (5) à tout moment, en permettant d'effectuer des manoeuvres d'ajustement pour introduire les boulons de la pale (6) dans des logements du roulement dans le moyeu rotatif (3).

5. Système selon la revendication 1, **caractérisé en ce qu'**il comprend des éléments électroniques de contrôle de la position capables de permettre un contact optimal parmi les éléments de support (38, 38') des bras (40, 40') et la géométrie de pale (6), quelle que soit la précision au moment de positionner ladite pale (6) par rapport aux tenailles (20).

6. Système selon la revendication 1, **caractérisé en ce qu'**il comprend des éléments qui permettent de modifier la géométrie des tenailles (20), tels que des cylindres de retrait (31) et des cylindres de fixation (33) afin d'éviter toute sorte de contact non désiré durant la fixation/libération de la pale (6), durant le montage ainsi que durant le démontage de cette pale.
